# EUROPEAN PATENT SPECIFICATION

(11) **EP 1 105 277 B1**
(45) Date of publication and mention of the grant of the patent: **14.12.2005**
(21) Application number: 97955086.0
(22) Date of filing: 19.06.1998
(51) Int. Cl.: B29C 47/00, B29C 47/10, B29C 47/02, C08L 1/14, B29C 47/06, B29B 15/12, B29B 9/14, B29B 9/06

(54) **COATED, LONG FIBER REINFORCING COMPOSITE STRUCTURE AND PROCESS OF PREPARATION THEREOF**
BESCHICHTETE LANGFASERIGE VERSTÄRKUNGSVERBUNDSTRUKTUR UND VERFAHREN ZU DEREN HERSTELLUNG
STRUCTURE COMPOSITE ENDUITE DE RENFORT A LONGUES FIBRES ET SON PROCEDE DE FABRICATION

(43) Date of publication of application: 13.06.2001
(73) Proprietor: Ticona Celstran, Inc., Winona, MN 55987 (US)
(72) Inventor: SHARMA, Subodh, K., Minnesota City, MN 55959 (US); LEE, Eric, V., Stockton, MN 55988 (US); REGAN, Timothy, A., Lewiston, MN 55952 (US); COMPTON, Jeffrey, N., Winona, MN 55987 (US); EASTEP, David, W., Winona, MN 55987 (US); ROLAND, Dale, K., Winona, MN 55987 (US); WESLEY, Michael, L., Dover, MN 55929 (US); BOWEN, Stephen, T., La Crescent, MN 55947 (US); SKARLUPKA, Randy, J., Winona, MN 55987 (US)
(74) Representative: James, Anthony Christopher W.P.
(86) International application number: PCT/US1997/024230
(87) International publication number: WO 1999/065661

(56) References cited:
- EP-A- 0 035 974
- EP-A- 0 491 043
- DE-A- 2 816 463
- DE-A- 19 523 490
- US-A- 4 252 696
- US-A- 4 312 917
- US-A- 4 486 373
- US-A- 4 960 642
- US-A- 5 165 941
- US-A- 5 268 050
- US-E- R E32 772

## Description

### Field of the Invention

The present invention relates to coated, long fiber reinforcing composite structure and a process for the preparation thereof. The process of preparation eliminates the requirement of combining selected additives such as pigments, reinforcing agents, flame retardants, etc. to the structure during or after fabrication thereof into shaped articles.

### Background of the Invention

Long fiber reinforcing composite structures are characterized as continuous fiber strands of material impregnated with a thermoplastic resin material, pelletized for easy handling, and molded into shaped articles. The shaped articles, ranging for racks for recreation vehicles to bicycle frames, exhibit good impact strength and stiffness due to unidirectional orientation of the reinforcing fiber strands in the shaped article.

Long fiber reinforcing composite structures suitable for the preparation of shaped articles exhibiting good impact strength and stiffness may be prepared according to U.S. Patent No. Re. 32,772 to Hawley. Hawley describes a process wherein a mass of thermoplastic resin is extruded through a stationary impregnation die onto a plurality of continuous lengths of reinforcing fiber strands passing through the die to produce a cylindrical-shaped structure. Simultaneously, the resin material is extruded through the die and the reinforcing fibers are pulled through the die at rates sufficient to cause thorough impregnation of individual fiber strands with resin material. The resulting long fiber reinforcing composite structure, described in U.S. Patent No. 4,312,917 to Hawley may be cut into individual inserts, placed into a two-piece stationary mold connected to an extruder, wherein a thermoplastic resin is heated and injected into the mold to provide a coating of resin on the cylindrical inserts to produce a compound composite structure.

Hawley's process for placing a coating of thermoplastic resin on the long fiber reinforcing composite structure has resulted in increased labor and insufficient production of compound composite structures to meet the requirements of manufacturers of reinforced thermoplastic shaped articles prepared therefrom.

In an attempt to overcome the labor intensive process of Hawley, and to enhance the appearance as well as the physical and chemical properties of shaped articles prepared from the long fiber reinforcing composite structure, pellets thereof have been physically mixed with additive materials, and the resulting product molded into shaped articles. Generally, the desired additive materials were cut into pellets, physically mixed with long fiber reinforcing composite structure pellets, and molded into the shaped articles. This physically mixing process has failed to provide suitable molding materials. Due to certain incompatibilities between the two substances, perhaps shape, density and pellet size, uniform physical mixtures of the long fiber reinforcing composite structure and additives have been difficult to prepare. Typically, non-uniform blends prepared from these mixtures have resulted in shaped articles exhibiting localized surface areas containing high or low concentrations of either component.

Another process for incorporating additives into the long fiber reinforcing composite structure prior to the fabrication of shaped articles therefrom requires the addition of the additive to the impregnation thermoplastic resin. However, due to the high temperatures required to melt some of the resins to ensure proper impregnation of the fiber strands, sometimes approaching the degradation temperature of the resins, temperature sensitive additives typically degraded and emitted volatile vapors during the heating and extrusion processes.

US-A-4 960 642 discloses a method for manufacturing pellets from which electromagnetic wave shielding material may be made. This US patent discloses the use of two extruders in tandem, the first extruder feeding a thermoplastic resin oligomer into a nipple holder into which conductive fibres, for example carbon fibres or metal fibres, are also introduced, whereby the oligomer, which is under pressure, fills the interstices of the conductive fibres. The resultant oligomer-impregnated structure is then passed through a nipple associated with the said nipple holder into a die within a cross-head into which a thermoplastic resin with which the oligomer is compatible is fed from the second extruder, thereby coating the outside of the impregnated fibre while the oligomer retains its fluidity. The resultant coated structure is then cooled and cut into pellets.

### Summary of the Invention

The present invention provides a pultrusion process for the continuous preparation of a coated, long fiber reinforcing composite structure, which process comprises extruding a mass of a first thermoplastic resin material in a flowable state into an impregnation die while simultaneously introducing a plurality of continuous lengths of reinforcing fiber strands into the die, contacting and impregnating each reinforcing fiber strand with the first thermoplastic resin material to produce a long fiber reinforcing composite structure, and wherein the impregnation die is an elongated, stationary die having no relatively movable components, said die having a continuous, fully open central passage extending longitudinally therethrough, and a plurality of lobes projecting radially inwardly into said central passage from spaced apart locations along the length of the inside, opposite side walls of said central passage in interleaving relation to each other to form a convoluted passage through which said first thermoplastic resin materials flows, the process comprising the steps of:
(a) heating a thermoplastic resin blend comprising a second thermoplastic resin material and an additive material to a temperature sufficient to produce a flowable second thermoplastic resin-additive material blend without degradation of the blend;
(b) extruding the second thermoplastic resin-additive material blend into a stationary coating die having no relatively moveable components, said coating die having a continuous, fully open central passage extending longitudinally therethrough, through which said second thermoplastic resin-additive material blend flows;
(c) simultaneously introducing the long fiber reinforcing composite structure into said coating die central passage;
(d) contacting the long fiber reinforcing composite structure with the second thermoplastic resin-additive material blend to form an outer coating of second thermoplastic resin-additive material blend on the long fiber reinforcing composite structure to produce a coated, long fiber reinforcing composite structure;
(e) drawing the coated, long fiber reinforcing composite structure from the coating die; and
(f) cutting the coated, long fiber reinforcing composite structure into pellets.

In certain embodiments, the process, which is for the preparation of a coated, long-fibre reinforcing structure suitable for the preparation of shaped articles, is
characterized by the steps of:
a. extruding a mass of a first thermoplastic resin material in a flowable state having no discrete shape into and longitudinally through an elongated, first stationary die having no relatively movable components, said die having a continuous, fully open central passage extending longitudinally therethrough, and a plurality of lobes projecting radially inwardly into said central passage from spaced apart locations along the length of the inside, opposite side walls of said central passage in interleaving relation to each other to form a convoluted passage through which said first thermoplastic resin material flows;
b. simultaneously introducing a plurality of continuous lengths of reinforcing fiber strands into said first die central passage at different locations therein;
c. separately passing each of said fiber strands longitudinally within and along the length of said central passage over and between said interleaving lobes in the presence of said flowing mass of first thermoplastic resin material to thoroughly contact and impregnate each of said fiber strands with said first thermoplastic resin material to produce a long fiber reinforcing composite structure;
d. drawing the long fiber reinforcing composite structure from said first die longitudinally thereto, wherein the composite structure is characterized as containing continuous fiber strands extending in said first thermoplastic resin material generally parallel to the longitudinal axis of the structure;
e. extruding a mass of a second thermoplastic resin material and an additive material to produce a second thermoplastic resin-additive material, wherein said second thermoplastic resin-additive material is in a flowable state having no discrete shape, into and longitudinally through an elongated, second stationary die having no relatively movable components, said die having a continuous, fully open central passage extending longitudinally therethrough to form a passage through which said second thermoplastic resin-additive material flows;
f. simultaneously introducing the long fiber reinforcing composite structure into said second stationary die central passage;
g. contacting and coating the long fiber reinforcing composite structure with the second thermoplastic resin-additive material to produce a coated, long fiber reinforcing composite structure, wherein the first and second thermoplastic resin materials are bonded at the first and second thermoplastic resin material interface;
h. drawing the coated, long fiber reinforcing composite structure from the second die; and
i. cutting the coated, long fiber reinforcing composite structure into pellets.

The present invention can be used to produce a coated, long fiber reinforcing composite structure characterized as a long fiber reinforcing composite core member comprised of a first thermoplastic resin material having a plurality of continuous fiber strands imbedded and extending therein generally parallel to the longitudinal axis of the core member; a thermoplastic coating member comprised of a second thermoplastic resin material and an additive material, wherein the coating member surrounds the core member; and an intermediate mixing zone between the core and coating members which bonds the first and second thermoplastic resin materials.

### Brief Description of the Drawings

While the specification concludes with claims particularly pointing out and distinctly claiming the present invention, the invention may be better understood from the following description in conjunction with the accompanying drawings in which:
**FIG. 1** is a schematic view in elevation of an apparatus utilized for the production of coated, long fiber reinforcing composite structures; and
**FIG. 2** is a view in elevation and cross section of a coated, long fiber reinforcing composite structure prepared according to the process.

### Detailed Description of the Invention

These is described a coated, long fiber reinforcing composite structure as well as a process for the preparation thereof. The process is useful for incorporating additives into long fiber reinforcing composite structure that cannot be added to thermoplastic resins utilized to impregnate long fiber reinforcing strands. The impregnation step of the process requires a resin exhibiting low viscosity and high flow properties to ensure complete impregnation of the individual fiber strands. Since many additives will increase the viscosity of the resin, decreasing flow and desirable impregnation properties, it is disadvantageous to incorporate such additives into the impregnation resin. However, it is possible to incorporate these viscosity-increasing additives as well as other additives into the long fiber reinforcing composite structures after the impregnation step has been completed by way of the novel process of the present invention.

Generally, the invention is a pultrusion process as defined in claim 1.

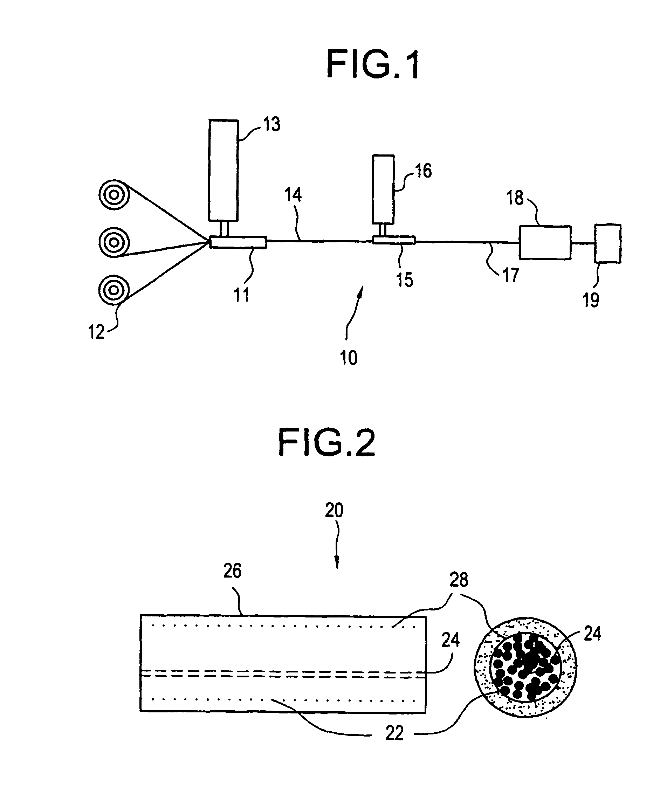

Referring to **FIG. 1,** there is illustrated a schematic top view in elevation of a typical apparatus in which the novel process of the invention is conducted. The process may be characterized as a pultrusion process **10** wherein a mass of a first thermoplastic resin material in a flowable state having no discrete shape is extruded longitudinally through an elongated, first stationary impregnation die **11** while continuous reinforcing fiber strands **12** are a pulled through die **11** via puller assembly **18.** Die **11** may be characterized as having a continuous, fully open central passage extending longitudinally therethrough, and a plurality of lobes projecting radially inwardly into the central passage from spaced apart locations along the length of the inside, opposite side walls of said central passage in interleaving relation to each other to form a convoluted passage in which the first thermoplastic resin material flows. The lobes function to allow individual fiber strands to be passed over at least one lobe such that the first thermoplastic resin material throughly impregnated the strands. Die **11** is attached to extruder **13** wherein the first thermoplastic resin material is heated and formed into a flowable mass. Continuous length of reinforcing fiber strands **12** are pulled through the central passage of die **11** and impregnated with the first thermoplastic resin material to produce the long fiber reinforcing composite structure **14.** Optionally, while the first thermoplastic resin material is still in a flowable state, the impregnated strands are drawn through a metering device wherein the cross-sectional shape and diameter of may be defined to form the long fiber reinforcing composite structure. Thereafter, long fiber reinforcing composite structure **14** is pulled through a stationary coating die **15.** Coating die **15** is attached to extruder **16** through which a second thermoplastic resin material and an additive material are heated and extruded through the die onto long fiber reinforcing composite structure **14.** Optionally, a second metering device may be placed after coating die **15** to define the cross-sectional diameter of the coated, long fiber reinforcing composite structure **17** produced by the process. The coated, long fiber reinforcing composite structure **17** is cut into pellets at pelletizer **19.**

Referring to **FIG. 2,** there is illustrated front and side views in elevation of a typical coated, long fiber reinforcing composite structure **20.** Coated, long fiber reinforcing composite structure **20** is characterized as a long fiber reinforcing composite core member **22** having a plurality of continuous fiber strands **24** imbedded and extending therethrough parallel to the longitudinal axis of the structure. Core member **22** is composed of a first thermoplastic resin material of sufficient volume to completely impregnate and surround the continuous fiber strands **24.** Coating member **26,** characterized as a solidified, second thermoplastic resin material containing an additive material, which surrounds and encloses the surface of core member **22**. An intermediate mixing zone **28,** characterized as an interface of the first and second thermoplastic resin materials bonds the first and second thermoplastic resin materials together to form an integral structure.

While it will be readily apparent to one skilled in the art that many thermoplastic resin materials, fibers and additive materials may be suitable for use in the process of the present invention to prepare coated, long fiber reinforcing composite structures, herein is described some processing conditions, resins, fiber, and additive materials suitable for use in the process.

Generally, the first thermoplastic resin material should exhibit high flow and low viscosity when heated and extruded through the impregnation die. It should not degrade when heated to temperatures in excess of the melt temperature which may be necessary to ensure complete impregnation of the fibers therewith. The first thermoplastic resin material may be selected from nylon 6, nylon 66, polyethylenes, polyacetals, polyphenylene sulfide, polyurethanes, polypropylene, polycarbonates, polyesters, acrylonitrile-butadiene-styrene, and combinations thereof

The continuous lengths of fiber strands necessary to provide reinforcing qualities to the composite structure may be selected from glass, amorphous carbon, graphitic carbon, aramids, stainless steel, ceramics, alumina, titanium, magnesium, metal-coated carbons, rock wool and combinations thereof. Generally, the strands, obtainable in bundles of many filaments on spools, are generally separated by the lobes within the impregnation die and impregnated during the process. Optionally, the fiber strands may be heated prior to impregnation to increase strand separation from the bundle and improve impregnation.

The second thermoplastic resin material must be compatible with the first thermoplastic resin material. The two resins must exhibit compatible coefficients of thermal expansion as well as bonding forces so that the intermediate mixing zone is formed at the interface of the resins during the process of preparing the coated, long fiber reinforcing composite structure. The coefficients of thermal expansion of the two resin materials be should be within the same range of each other to ensure that the resin materials within the coated, long fiber reinforcing composite structure will expand and contract at the same rates. Otherwise, deformation of the composite structure may occur. The second thermoplastic resin material is a carrier of the additive material and should be readily mixable therewith. While the second thermoplastic resin material may be selected from nylon 6, nylon 66, polyethylenes, polyacetals, polyphenylene sulfide, polyurethanes, polypropylene, polycarbonates, polyesters, acrylonitrile-butadiene-styrene, and combinations thereof, it is not essential that the first and second thermoplastic resin materials be identical. The second thermoplastic resin material should mix well with the additive material, bond with the first thermoplastic resin material, and exhibit a relatively low melt temperature so that a coating of the mixture will not cause melting of the first thermoplastic resin material of the long fiber reinforcing composite structure.

Additive materials are generally selected from components that provide enhanced molding properties as well as physical and chemical properties of shaped articles prepared therefrom. The additive materials may also be selected from components that are not suitable for incorporating into the first thermoplastic resin material due to their viscosity-increasing characteristics. It may be desirable to add pigments to the composite structure to reduce finishing labor of shaped articles, or it may be desirable to add a flame retardant agents to the composite structure to enhance the flame retarding features of the shaped article. Since many additive material are heat sensitive, an excessive amount of heat may cause them to decompose and produce volatile gases. Therefore, if a heat sensitive additive material is extruded with an impregnation resin under high heating conditions, the result may be a complete degradation of the additive material. Additive materials of the invention may be selected from mineral reinforcing agents, lubricants, flame retardants, blowing agents, foaming agents, ultraviolet light resistant agents, heat sensitive pigments, and combinations thereof. The mineral reinforcing agents may be selected from calcium carbonate, silica, mica, clays, talc, calcium silicate, graphite, wollastonite, calcium silicate, alumina trihydrate, barium ferrite, and combinations thereof.

The second thermoplastic resin-additive material composition is a blend of the second thermoplastic resin and additive materials. Generally, the composition may contain from about 10 to about 90 weight percent of the additive material and from about 90 to 10 weight percent of the second thermoplastic resin material. Typically, the second thermoplastic resin-additive material composition may contain from about 15 to about 85 weight percent of the additive material and from about 85 to about 15 weight percent of the second thermoplastic resin material, and preferably, from about 25 to about 75 weight percent of the additive material and from about 75 to about 25 weight percent of the second thermoplastic resin material. The composition may be prepared by melt blending the components in an extruder to form suitable mixtures of the components prior to feeding to the coating die of the process.

Generally, the first stationary, impregnation die of the present invention is operated at temperatures that are sufficient to cause melting and impregnation of the first thermoplastic resin material onto the long fiber reinforcing strands. Typically, the operation temperatures of the impregnation die are higher that the melt temperature of the first thermoplastic resin material, and preferably, the impregnation die is operated at temperatures of from 400° to 800° (204.4 to 426.7°C). Generally, the second stationary, coating die of the invention is operated at temperatures sufficient to ensure melting of the second thermoplastic resin-additive material blend without degradation of the additive material in the blend. Typically, the coating die is operated at temperatures of from 250° to 700°F (121.1 to 371.1°C).

Generally, shaped articles are prepared from pellets of coated, long fiber reinforcing composite structures by molding processes. The pellets are placed in an extruder-die assembly and molded into the shaped articles. Since pigments and other agents may be applied to the composite structure during the coating portion of the process, there is little need for finishing or applying additives to the surface of the shaped article.

## Claims

1. A pultrusion process for the continuous preparation of a coated, long fiber reinforcing composite structure, which process comprises extruding a mass of a first thermoplastic resin material in a flowable state into an impregnation die while simultaneously introducing a plurality of continuous lengths of reinforcing fiber strands into the die, contacting and impregnating each reinforcing fiber strand with the first thermoplastic resin material to produce a long fiber reinforcing composite structure, and wherein the impregnation die is an elongated, stationary die having no relatively movable components, said die having a continuous, fully open central passage extending longitudinally therethrough, and a plurality of lobes projecting radially inwardly into said central passage from spaced-apart locations along the length of the inside, opposite side walls of said central passage in interleaving relation to each other to form a convoluted passage through which said first thermoplastic resin materials flows, the process comprising the steps of:
(a) heating a thermoplastic resin blend comprising a second thermoplastic resin material and an additive material to a temperature sufficient to produce a flowable second thermoplastic resin-additive material blend without degradation of the blend;
(b) extruding the second thermoplastic resin-additive material blend into a stationary coating die having no relatively moveable components, said coating die having a continuous, fully open central passage extending longitudinally therethrough, through which said second thermoplastic resin-additive material blend flows;
(c) simultaneously introducing the long fiber reinforcing composite structure into said coating die central passage;
(d) contacting the long fiber reinforcing composite structure with the second thermoplastic resin-additive material blend to form an outer coating of second thermoplastic resin-additive material blend on the long fiber reinforcing composite structure to produce a coated, long fiber reinforcing composite structure;
(e) drawing the coated, long fiber reinforcing composite structure from the coating die; and
(f) cutting the coated, long fiber reinforcing composite structure into pellets.

2. The process of claim 1, wherein, after impregnation of the fiber strands, they are passed through a first metering device so as to define the cross-sectional shape and diameter of the long fiber reinforced composite structure.

3. The process of claim 1 or 2, wherein the coated, long fiber reinforced composite structure is passed through a second metering device so as to define the cross-sectional shape and diameter of the coated, long fiber reinforced composite structure.

4. The process of claim 1, 2 or 3, wherein said additive is selected from the group consisting of heat-sensitive pigments, mineral reinforcing agents, lubricants, flame retardants, blowing agents, foaming agents, ultraviolet light resistant agents, and combinations thereof.

5. The process of claim 4, wherein said mineral reinforcing agent is selected from the group consisting of calcium carbonate, silica, mica, clays, talc, calcium silicate, graphite, wollastonite, calcium silicate, alumina trihydrate, barium ferrite, and combinations thereof.

6. The process of any of claims 1 to 5, wherein said first and said second thermoplastic resin materials are selected from the group consisting of nylons, polyethylenes, polyacetals, polyphenylene sulfide, polyurethanes, polypropylene, polycarbonates, polyesters, acrylonitrile-butadiene-styrene, and combinations thereof.

7. The process of any of claims 1 to 6, wherein the first thermoplastic resin material is the same as said second thermoplastic resin material.

8. The process of any of claims 1 to 6, wherein the first thermoplastic resin material is different than said second thermoplastic resin material.

9. The process accordingly to claim 8, wherein the first and second thermoplastic resin materials exhibit compatible coefficients of thermal expansion.

10. The process of any of claims 1 to 9, wherein said reinforcing strands are selected from the group consisting of glass, amorphous carbon, graphitic carbon, aramids, stainless steel, ceramics, alumina, titanium, magnesium, metal-coated carbons, rock wool and combinations thereof.

11. The process of any of claims 1 to 10, wherein the temperature of the impregnation die is at least 150°F (83.3°C) higher than the melt temperature of the first thermoplastic resin material.

12. The process of any of claims 1 to 11, wherein the temperature of the impregnation die is from 400° to 800°F (204.4 to 426.7°C).

13. The process of any of claims 1 to 12, wherein the stationary coating die is operated at a temperature of from 250° to 700°F (121.1 to 371.1°C).

14. The process of any of claims 1 to 13, wherein the second thermoplastic resin additive material blend comprises 10-90% by weight of additive material and 90-10% by weight of the second thermoplastic resin.

15. A process according to any of claims 1 to 14, wherein the impregnation die has a central passage extending longitudinally therethrough and a plurality of continuous lengths of reinforcing fiber strands are introduced into said central passage at different locations therein.

16. A process according to any of claims 1 to 15, wherein the coating die is located at a distance downstream from the impregnation die.

## Patentansprüche

1. Pultrusionsverfahren zur kontinuierlichen Herstellung einer beschichteten langfaserigen verstärkungsverbundstruktur, wobei das Verfahren die folgenden Schritte aufweist, nämlich Extrudieren einer Masse eines ersten thermoplastischen Harz-Materials in einem fließfähigen Zustand in eine Imprägnierungs-Düse bei gleichzeitigem Einführen einer Vielzahl von kontinuierlichen Längen von verstärkungsfasersträngen in die Düse, In-Kontakt-Bringen und imprägnieren jedes verstärkungsfaserstranges mit dem ersten thermoplastischen Harz-Material, um eine langfaserige Verstärkungsverbundstruktur zu bilden, wobei die Imprägnierungs-Düse eine längliche, stationäre Düse ohne relativ bewegliche Komponenten ist, wobei die Düse einen kontinuierlichen, vollständig offenen zentralen Durchgang aufweist, der sich hierdurch längs erstreckt, sowie eine Vielzahl von Nasen, die radial entlang der Innenseitelänge in den zentralen Durchgang hineinragen, und zwar von in Abständen getrennten Stellen aus, wobei die gegenüberliegenden Seitenwände des zentralen Durchgangs in Überlappung miteinander stehen, um einen übereinander gewickelten Durchgang zu bilden, durch welchen das erste thermoplastische Harz-Material fließt, wobei das Verfahren ferner die Schritte aufweist:
(a) Erhitzen einer thermoplastischen Harzmischung, welche ein zweites thermoplastisches Harz-Material und ein Zusatzmaterial umfasst, auf eine Temperatur, die ausreichend ist, um eine zweite fließfähige, thermoplastische, Barz-Zusatzmaterialmischung zu bilden, ohne Abbau der Mischung;
(b) Extrudieren der zweiten thermoplastischen Harz-Zusatzmaterialmischung in eine stationäre Beschichtungs-Düse ohne relativ bewegliche Komponenten, wobei die Beschichtungs-Düse einen kontinuierlichen, vollständig offenen zentralen Durchgang aufweist, welcher sich längs hierdurch erstreckt, und durch welchen die zweite thermoplastische Harz-Zusatzmaterialmischung fließt;
(c) gleichzeitiges Einführen der langfaserigen Verstärkungsverbundstruktur in den zentralen Durchgang der Beschichtungs-Düse;
(d) In-Kontakt-Bringen der langfaserigen Verstärkungsverbundstruktur mit der zweiten thermoplastischen Harz-Zusatzmaterialmischung, um auf der langfaserigen Verstärkungsverbundstruktur eine äußere Beschichtung aus der zweiten thermoplastischen Harz-Zusatzmaterialmischung zu bilden, zur Herstellung einer beschichteten, langfaserigen Verstärkungsverbundstruktur;
(e) Ausziehen der beschichteten, langfaserigen Verstärkungsverbundstruktur aus der Beschichtungs-Düse; und
(f) schneiden der beschichteten, langfaserigen Verstärkungsverbundstruktur in Pellets.

2. Verfahren nach Anspruch 1, wobei nach der Imprägnierung der Faserstränge diese durch eine erste Messvorrichtung geführt werden, um die Querschnittsform und den Durchmesser der langfaserigen Verstärkungsverbundstruktur zu bestimmen.

3. Verfahren nach Anspruch 1 oder 2, wobei die beschichtete, langfaserige Verstärkungsverbundstruktur durch eine zweite Messvorrichtung geführt wird, um die Querschnittsform und den Durchmesser der beschichteten, langfaserigen Verstärkungsverbundstruktur zu bestimmen.

4. Verfahren nach Anspruch 1, 2 oder 3, wobei der Zusatz ausgewählt ist aus der Gruppe bestehend aus Hitze-sensitiven Pigmenten, mineralischen Verstärkungsagenzien, Gleitmittel, Flammhemmer, Treibmittel, Schaumbildner, Agenzien, die gegenüber ultraviolettem Licht resistent sind, und Kombinationen daraus.

5. Verfahren nach Anspruch 4, wobei das mineralische Verstärkungsagens ausgewählt ist aus der Gruppe bestehend aus Calciumcarbonat, Silika, Mika, Tonerden, Talkum, Calciumsilikat, Graphit, Wollastonit, Calciumsilikat, Aluminiumtrihydrat, Bariumferrit, und Kombinationen davon.

6. Verfahren nach einem der Ansprüche 1 bis 5, wobei das erste und das zweite thermoplastische Barz-Material ausgewählt ist aus der Gruppe bestehend aus Nylon, Polyethylenen, Polyacetalen, Polyphenylensulfid, Polyurethane, Polypropylen, Polycarbonate, Polyester, Acrylnitril-Butadien-Styren, und Kombinationen davon.

7. Verfahren nach einem der Ansprüche 1 bis 6, wobei das erste thermoplastische Harz-Material das gleiche wie das zweite thermoplastische Harz-Material ist.

8. Verfahren nach einem der Ansprüche 1 bis 6, wobei das erste thermoplastische Harz-Material unterschiedlich zu dem zweiten thermoplastischen Hert-Material ist.

9. verfahren nach Anspruch 8, wobei das erste und das zweite thermoplastische Harz-Material einen kompatiblen, thermischen Volumenausdehnungskoeffizienten aufweist.

10. Verfahren nach einem der Ansprüche 1 bis 9, wobei die Verstärkungsstränge ausgewählt sind aus der Gruppe bestehend aus Glas, amorphem Kohlenstoff, graphitischem Kohlenstoff, Aramide, rostfreier Stahl, Keramik, Aluminium, Titanium, Magnesium, metallbeschichteten Kohlenstoffen, Mineralwolle und Kombinationen davon.

11. Verfahren nach einem der Ansprüche 1 bis 10, wobei die Temperatur der Imprägnierungs-Düse mindestens 150°F (83,3°C) höher ist als die Schmelztemperatur des ersten thermoplastischen Harz-Materials.

12. Verfahren nach einem der Ansprüche 1 bis 11, wobei die Temperatur der Imprägnierungs-Düse von 400° bis 800°F (204,4 bis 426,7°C) ist.

13. Verfahren nach einem der Ansprüche 1 bis 12, wobei die stationäre Beschichtungs-Düse bei einer Temperatur von 250° bis 700°F (121,1 bis 371,1°C) betrieben wird.

14. Verfahren nach einem der Ansprüche 1 bis 13, wobei die zweite thermoplastische Harz-Zusatzmaterialmischung 10 bis 90 Gew.-% eines Zusatzmaterials und 90 bis 10 Gew.-% des zweiten thermoplastischen Harzes aufweist.

15. Verfahren nach einem der Ansprüche 1 bis 14, wobei die Imprägnierungs-Düse einen zentralen Durchgang aufweist, welcher sich längs hierdurch erstreckt, und wobei eine Vielzahl von kontinuierlichen Längen an Verstärkungsfasersträngen an unterschiedlichen Stellen in den zentralen Durchgang eingeführt wird.

16. Verfahren nach einem der Ansprüche 1 bis 15, wobei die Beschichtüngs-Düse stromabwärts in einem Abstand von der Imprägnierungs-Düse vorgesehen ist.

## Revendications

1. Procédé de pultrusion pour la préparation en continu d'une structure composite enduite de renfort à fibres longues, lequel procédé comprend l'extrusion d'une masse d'un premier matériau de résine thermoplastique à l'état fluide, dans une filière pour imprégnation, tout en introduisant, simultanément, une pluralité de longueurs continues de brins de fibres de renforcement dans la filière, la mise en contact et l'imprégnation de chaque brin de fibres de renforcement avec le premier matériau de résine thermoplastique, afin de produire une structure composite de renfort à fibres longues, et dans lequel la filière pour imprégnation est une filière fixe et allongée n'ayant aucun composant relativement mobile, ladite filière ayant un passage central continu et totalement ouvert qui s'étend longitudinalement à travers celle-ci, et une pluralité de lobes faisant saillie radialement vers l'intérieur dans ledit passage central à partir d'emplacements espacés, sur la longueur des parois latérales intérieures et opposées dudit passage central en une relation d'entremêlement les unes avec les autres, pour former un passage tortueux à travers lequel ledit premier matériau de résine thermoplastique s'écoule, le procédé comprenant les étapes consistant à :
(a) chauffer un mélange de résine thermoplastique comprenant un second matériau de résine thermoplastique et un matériau additif jusqu'à une température suffisante pour produire un mélange fluide de seconde résine thermoplastique - matériau additif, sans dégradation du mélange ;
(b) extruder le mélange de seconde résine thermoplastique - matériau additif dans une filière plate pour enduction fixe n'ayant aucun composant relativement mobile, ladite filière plate pour enduction ayant un passage central continu totalement ouvert, qui s'éténd longitudinalement à travers calle-ci, à travers lequel s'écoule ledit mélange de seconde résine thermoplastique - matériau additif;
(c) introduire, simultanément, la structure composite de renfort à fibres longues dans ledit passage central de la filière plate pour enduction ;
(d) mettre en contact la structure composite de renfort à fibres longues avec le mélange de seconde résine thermoplastique - matériau additif pour former un revêtement extérieur de mélange de seconde résine thermoplastique - matériau additif sur la structure composite de renfort à fibres longues, afin de produire une structure composite enduite de renfort à fibres longues ;
(e) extraire la structure composite enduite de renfort à fibres longues de la filière plate pour enduction ; et
(f) découper la structure composite enduite de renfort à fibres longues en granulés.

2. Procédé selon la revendication 1, dans lequel, après imprégnation des brins de fibres, ceux-ci passent à travers un premier dispositif de mesure de façon à définir la forme de la section et le diamètre de la structure composite de renfort à fibres longues.

3. Procédé selon la revendication 1 ou 2, dans lequel la structure composite enduite de renfort à fibres longues passe à travers un second dispositif de mesure de façon à définir la forme de la section et le diamètre de la structure composite enduite de renfort à fibres longues.

4. Procédé selon la revendication 1, 2 ou 3, dans lequel ledit additif est choisi dans le groupe consistant an les pigments thermosensibles, les agents de renforcement minéraux, les lubrifiants, les retardateurs de flamme, les agents gonflants, les agents moussants, les agents résistant à la lumière ultraviolette, et des combinaison de ceux-ci.

5. Procédé selon la revendication 4, dans lequel ledit agent de renforcement minéral est choisi dans le groupe consistant en le carbonate de calcium, la silice, le mica, les argiles, le talc, le silicate de calcium, le graphite, la wollastonite, le silicate de calcium, le trihydrate d'alumine, la ferrite de baryum et des combinaisons de ceux-ci.

6. Procédé selon l'une quelconque des revendications 1 à 5, dans lequel lesdits premier et second matériaux de résine thermoplastique sont choisis dans le groupe consistant en les nylons, les polyéthylènes, les polyacétals, le sulfure de polyphénylène, les polyuréthannes, le polypropylène, les polycarbonates, les polyesters, l'acrylonitrile - butadiène-styrène, et des combinaisons de ceux-ci.

7. Procédé selon l'une quelconque des revendications 1 à 6, dans lequel le premier matériau de résine thermoplastique est le même que le second matériau de résine thermoplastique.

8. Procédé selon l'une quelconque des revendications 1 à 6, dans lequel le premier matériau de résine thermoplastique est différent du second matériau de résine thermoplastique.

9. Procédé selon la revendication 8, dans lequel les premier et second matériaux de résine thermoplastique ont des coefficients de dilatation thermique compatibles.

10. Procédé selon l'une quelconque des revendications 1 à 9, dans lequel lesdits brins de renforcement sont choisis dans le groupe consistant en le vene, le carbone amorphe, le carbone graphitique, les aramides, l'acier inoxydable, les céramiques, l'alumine, le titane, le magnésium, les carbones enduits d'une couche métallique, la laine de roche et des combinaisons de ceux-ci.

11. Procédé selon l'une quelconque des revendications 1 à 10, dans lequel la température de la filière pour imprégnation est supérieure d'au moins 150°F (83,3°C) à la température de fusion du premier matériau de résine thermoplastique.

12. Procédé selon l'une quelconque des revendications 1 à 11, dans lequel la température de la filière pour imprégnation est de 400° à 800°F (204,4 à 426,7°C).

13. Procédé selon l'une quelconque des revendications 1 à 12, dans lequel la filière plate pour enduction fixe fonctionne à une température de 250° à 700°F (121,1 à 371,1°C).

14. Procédé selon l'une quelconque des revendications 1 à 13, dans lequel le mélange de seconde résine thermoplastique - matériau additif comprend de 10 à 90 % en poids de matériau additif et de 90 à 10 % en poids de la seconde résine thermoplastique.

15. Procédé selon l'une quelconque des revendications 1 à 14, dans lequel la filière pour imprégnation a un passage central qui s'étend longitudinalement à travers celle-ci, et une pluralité de longueurs continues de brins de fibres de renforcement est introduite dans ledit passage central en différents emplacements.

16. Procédé selon l'une quelconque des revendications 1 à 15, dans lequel la filière plate pour enduction est située à une certaine distance en aval de la filière pour imprégnation.
